# EUROPEAN PATENT APPLICATION

(11) **EP 4 648 194 A1**
(43) Date of publication of application: **12.11.2025**
(21) Application number: 23918208.2
(22) Date of filing: 31.10.2023
(51) Int. Cl.: H01M 50/244

(54) **TAMPER-RESISTANT BATTERY PACK**

(30) Priority: 29.01.2023 CN 202310066323; 29.01.2023 CN 202320118366 U
(71) Applicant: Eve Energy Co., Ltd., Huizhou, Guangdong 516006 (CN)
(72) Inventor: HUANG, Weicai, Huizhou, Guangdong 516006 (CN)
(74) Representative: Berggren Oy
(86) International application number: PCT/CN2023/128316
(87) International publication number: WO 2024/156208

(57) **Abstract**

A tamper-resistant battery pack, comprising: an edge beam (1); a cover body (2); and a bottom plate (3). A maintenance cover (4) is assembled on the bottom plate (3); first connecting structures (5) used for preventing the cover body (2) from being disassembled, a second connecting structure (6) used for preventing the bottom plate (3) from being disassembled, and a third connecting structure (7) used for preventing the maintenance cover (4) from being disassembled are provided on the inner side of the edge beam (1); the third connecting structure (7) is provided with an unlocking part (73); when the unlocking part (73) is not operated for unlocking, the maintenance cover (4) is locked by means of the third connecting structure (7), the cover body (2) is locked by means of the first connecting structures (5), and the bottom plate (3) is locked by means of the second connecting structure (6); and when the unlocking part (73) is operated for unlocking, the maintenance cover (4) is unlocked, so that the second connecting structure (6) in the edge beam (1) is operated to unlock the bottom plate (3), and the first connecting structures (5) in the edge beam (1) are operated to unlock the cover body (2).

## Description

The present application claims priority to Chinese Patent Application No. 202310066323.X filed with the Chinese Patent Office on January 29, 2023, and Chinese patent application No. 202320118366.3 filed with the Chinese Patent Office on January 29, 2023. The disclosures of the aforementioned applications are hereby incorporated by reference in their entireties.

### TECHNICAL FIELD

The present application relates to the technical field of battery packs, for example, to a tamper-resistant battery pack.

### BACKGROUND

In related arts, a battery pack is usually fixed in a vehicle, and a service port is provided to facilitate maintenance. Therefore, manual inspection is directly performed to the battery pack at the service port, to find damaged components to maintain, which is not necessary to disassemble the battery pack from the vehicle for maintenance.

However, in actual life, in case that the battery pack of the vehicle is damaged or malfunctioned, some non-professionals often disassemble the battery pack themselves to maintain. It may easily cause secondary damage to the battery pack due to improper maintenance, or even cause safety accidents such as electric shock to personnels.

### SUMMARY

### TECHNICAL PROBLEM

To overcome at least one of the drawbacks described above in prior art, the present application provides a tamper-resistant battery pack. It raises difficulty on disassembling a battery, and avoids non-professionals from disassembling and repairing the battery pack themselves, thereby guaranteeing life safety of personnels.

### TECHNICAL SOLUTION

An object of embodiments of the present application is to provide a tamper-resistant battery pack, including a frame beam; a cover assembled to a side of the frame beam; and a bottom plate assembled to the other side of the frame beam; wherein the bottom plate is assembled with a service cover; an inner side of the frame beam is provided with a first connection structure configured to prevent disassembly of the cover, a second connection structure configured to prevent disassembly of the bottom plate, and a third connection structure configured to prevent disassembly of the service cover; and the third connection structure is provided with an unlocking portion; in case that the unlocking portion is not operated to be unlocked, the service cover is locked by the third connection structure, the cover is locked by the first connection structure, and the bottom plate is locked by the second connection structure.

According to the above solution, the overall difficulty on disassembling the battery pack is raised, it is difficult for non-professionals to disassemble the battery pack without doing in a correct disassembling order, and it is difficult for the non-professionals to find the unlocking portion. Thus, the battery pack cannot be disassembled without the unlocking portion being operated, thereby improving the tamper-resistant performance of the battery pack.

### BENEFICIAL EFFECT

The present application has the following technical effects:
1. by providing the first connection structure, the connection between the inside of the cover and the frame beam is realized, thereby effectively avoiding the disassembly of the cover from the outside of the cover;
2. by providing the second connection structure, the connection between the inside of the bottom guard plate and the frame beam is realized, thereby effectively avoiding the disassembly of the bottom guard plate from the outside of the bottom guard plate;
3. by providing the third connection structure, the connection between the inside of the service cover and the frame beam is realized, thereby effectively avoiding disassembly of the service cover from the outside of the service cover;
4. by providing the unlocking portion, the unlocking portion is operable to unlock the third connection structure, thereby disassembling the service cover, and further disassembling the bottom guard plate and the cover from the inside of the battery pack;
5. the first connection structure, the second connection structure, and the third connection structure are all linked with one another, and have only one disassembly order, thereby effectively improving the tamper-resistance of the battery pack and reducing the possibility on non-professionals to disassemble and repair the battery pack themselves.

### BRIEF DESCRIPTION OF THE DRAWINGS

FIG. 1 is a front view of a battery pack according to an embodiment of the present application;
FIG. 2 is a schematic structural diagram of a rear view of a battery pack according to an embodiment of the present application;
FIG. 3 is a schematic structural diagram of a frame beam of a battery pack according to an embodiment of the present application;
FIG. 4 is a schematic structural diagram of a first connection structure according to an embodiment of the present application;
FIG. 5 is a schematic structural diagram of a partial explosion structure of a battery pack according to an embodiment of the present application;
FIG. 6 is an enlarged view of a region A in FIG. 5;
FIG. 7 is a schematic diagram of an inner disassemble structure of a battery pack according to an embodiment of the present application;
FIG. 8 is an enlarged view of a region B in FIG. 7;
FIG. 9 is a schematic structural diagram of a partial explosion structure of a BMS compartment according to an embodiment of the present application;
FIG. 10 is a schematic exploded diagram of a third connection structure according to an embodiment of the present application; and
FIG. 11 is a schematic assembled diagram of a third connection structure according to an embodiment of the present application.

Herein, reference numerals have the following meanings: 1. frame beam; 11. first end beam; 111. rectangular recess; 12. second middle beam; 121. through groove; 13. third end beam; 14. side beam; 2. cover; 21. battery cover; 22. BMS upper cover; 3. bottom plate; 31. bottom guard plate; 32. BMS lower cover; 4. service cover; 5. first connection structure; 51. first connecting member; 52. second connecting member; 6. second connection structure; 61. first plugging member; 62. second plugging member; 63. third locking member; 64. fourth locking member; 641. fixing portion; 642, hook portion; 7. third connection structure; 71. first unlocking member; 72. second unlocking member; 721. bracket nut; 722. customized bolt; 723. sealing ring; 724. mounting barrel; 73. unlocking portion; 8. first anti-fake component; 9. second anti-fake component; and 10. screwdriver.

### DETAILED DESCRIPTION OF THE EMBODIMENTS

In the description of the present application, it should be noted that the orientation or positional relationship indicated by the terms "upper", "lower", "front", "rear", "left", "right", "vertical", "horizontal", "top", "bottom", "inner", "outer", and the like, is based on the orientation or positional relationship shown in the drawings, merely to facilitate the description of the present application and to simplify the description, and not to indicate or imply that the indicated device or element must have a particular orientation, be constructed and operated in a particular orientation, and therefore is not to be construed as limiting the application.

Unless defined otherwise, all technical and scientific terminology used herein has the same meaning as commonly understood by one of ordinary skill in the art in the field of the present application. The terminology used in the specification of the present application is for the purpose of describing specific examples only and is not intended to limit the present application.

In an embodiment, the frame beam includes a first end beam, a second middle beam, a third end beam, and two side beams. The cover includes a battery cover and a BMS upper cover. The bottom plate includes a bottom guard plate and a BMS lower cover. The first end beam, the second middle beam, and the two side beams connect as a rectangular frame to assemble with edges of the battery cover and the bottom guard plate respectively to define an inner hollow battery compartment. The second middle beam, the third end beam, and the two side beams connect as a rectangular frame to assemble with edges of the BMS upper cover and the BMS lower cover respectively to define an inner hollow BMS compartment.

According to the above solution, two independent compartments are defined to provide to the first connection structure, the second connection structure and the third connection structure to define a connection all linked with one another, thereby raising the disassembly difficulty.

In an embodiment, the first connection structure includes a first connecting member disposed on an inner side of the cover and a second connecting member disposed on the side beam. The first connecting member is detachably connected with the second connecting member.

According to the above solution, it is possible to connect and fix the inside of the cover and the side beam, and when the cover is disassembled from the outside, the cover is pulled by the first connecting member and the second connecting member inside. As such, the cover cannot be disassembled from the outside.

In an embodiment, the second connection structure includes a first plugging member disposed on an inner side of the bottom guard plate, a second plugging member disposed on the first end beam, a third locking member disposed on the inner side of the bottom guard plate, and a fourth locking member disposed on a side beam of the two side beams. The first plugging member is detachably connected with the second plugging member, and the third locking member is detachably connected with the fourth locking member.

According to the above solution, an end of the bottom guard plate can be clamped by the first plugging member and the second plugging member, and the other end of the bottom guard plate can be connected and fixed by the third locking member and the fourth locking member. When trying to disassemble the bottom guard plate from the outside, due to the pulling action of the first plugging member, the second plugging member, the third locking member and the fourth locking member, the bottom guard plate cannot be disassembled from the outside.

In an embodiment, the fourth locking member is provided with a fixing portion positioned at an end of the fourth locking member and configured to connect with the side beam; and a hook portion positioned at another end of the fourth locking member and configured to connect with the third locking member.

According to the above solution, the fourth locking member can be fixed on the inner side of the side beam, meanwhile providing a connecting and fixing effect on the third locking member.

In an embodiment, each end of the second middle beam is provided with a through groove on a side close to the bottom guard plate, the fourth locking member extends through the through groove, the fixing portion is positioned in the BMS compartment, and the hook portion is positioned in the battery compartment and is configured to lock the second connection structure from an inner side of the BMS compartment.

According to the above solution, it is convenient to lock the second connection structure from the BMS compartment, thereby providing professionals with a unique disassembly order for disassembly and maintenance.

In an embodiment, the third connection structure includes a first unlocking member disposed on an inner side of the service cover, and the service cover being assembled to the BMS lower cover; and a second unlocking member extended through the third end beam, an end of the second unlocking member positioned in the BNS compartment being detachably connected with the first unlocking member, and the unlocking portion being positioned at an end of the second unlocking member away from the first unlocking member.

According to the above solution, the unlocking between the second unlocking member and the first unlocking member can be realized by operating the second unlocking member, so that the service cover can be opened from the outside. When the first unlocking member and the second unlocking member are not unlocked, the service cover cannot be opened from the outside.

In an embodiment, the second unlocking member includes a bracket nut; and a customized bolt extending through the third end beam, the first unlocking member, and the bracket nut sequentially; and a seal ring sleeved on the customized bolt.

According to the above solution, the first unlocking member is unlocked by rotating the customized bolt, and the friction between the first unlocking member and the customized bolt can be enhanced by the sealing ring. As such, the customized bolt is prevented from loosening due to the shaking, and the unlocking by mistake is not easily caused.

In an embodiment, a mounting barrel is provided through the third end beam, the mounting barrel communicates with the BMS compartment and is configured to provide a through-going space for the customized bolt, and the sealing ring is configured to seal between the customized bolt and an inner wall of the mounting barrel.

According to the above solution, the third end beam is prevented from wearing or damage by being repeatedly stressed.

In an embodiment, the mounting barrel is provided with a first anti-fake component away from the BMS compartment, and the first anti-fake component is configured to cover the unlocking portion of the second unlocking member.

According to the above solution, the unlocking portion is covered, so that the secrecy of the unlocking portion is improved, and the possibility of being disassembled by non-professionals is reduced.

In an embodiment, a second anti-fake component is provided on a side of the third end beam away from the BMS compartment, and the second anti-fake component is configured to cover the first anti-fake component.

According to the above solution, it is intended to serve as a reminder to inform professionals whether or not the battery pack is repaired.

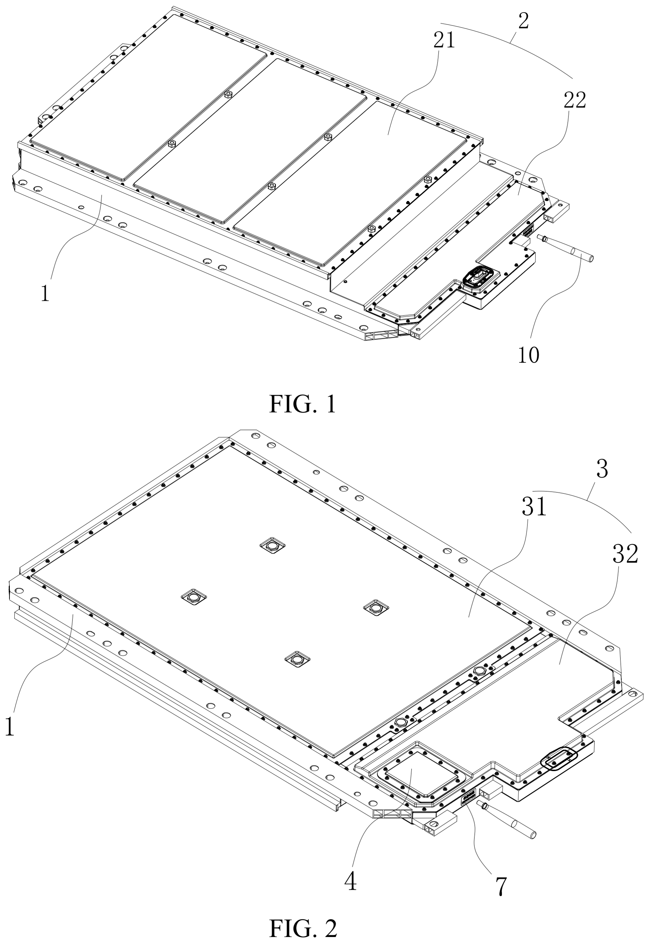

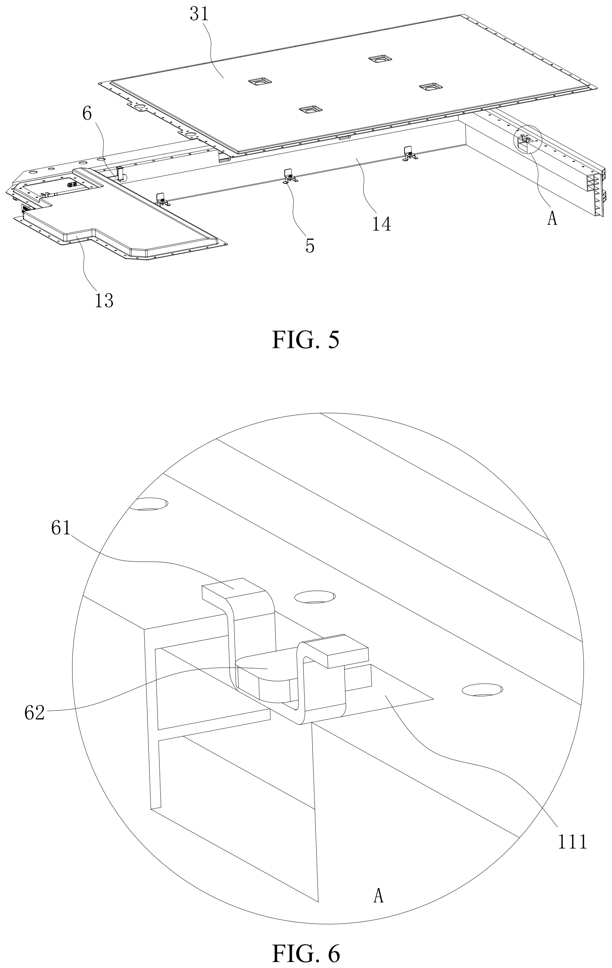

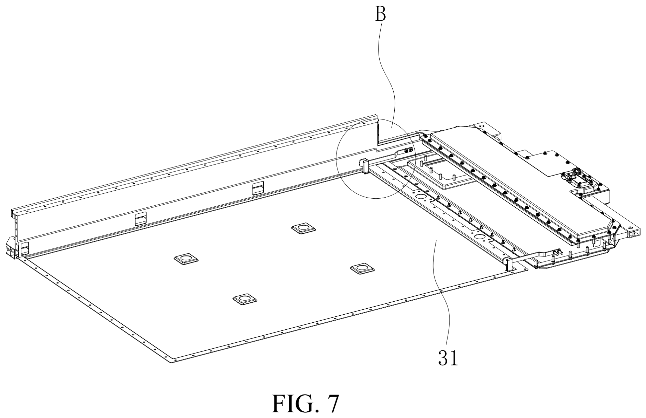

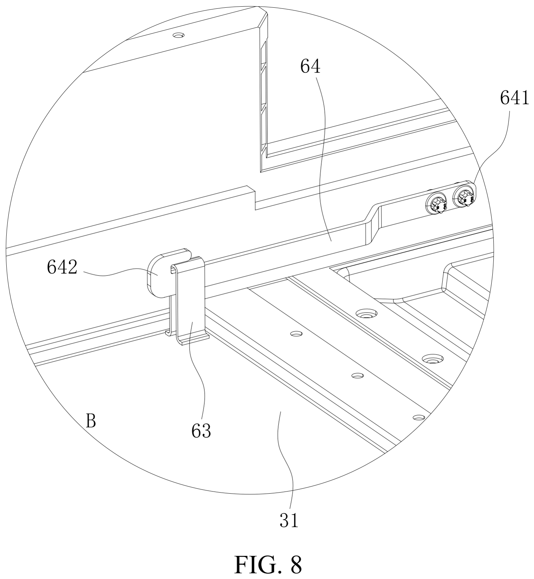

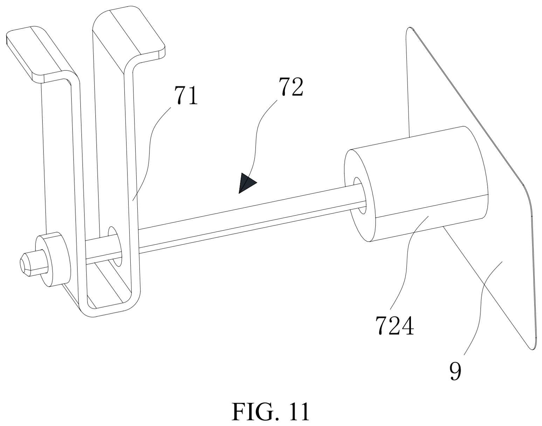

An embodiment 1 of the present application, as shown in FIG. 1 to FIG. 11, discloses a tamper-resistant battery pack. The tamper-resistant battery pack includes a frame beam 1, a cover 2 and a bottom plate 3. The cover 2 is assembled to a side of the frame beam 1, and the bottom plate 3 is assembled to the other side of the frame beam 1. Specifically, the frame beam 1 includes a first end beam 11, a second middle beam 12, a third end beam 13, and two side beams 14. The cover 2 includes a battery cover 21 and a BMS upper cover 22. The bottom plate 3 includes a bottom guard plate 31 and a BMS lower cover 32. The first end beam 11, the second middle beam 12, and the two side beams 14 define a rectangular frame, and are respectively assembled with edges of the battery cover 21 and the bottom guard plate 31 to define an inner hollow battery compartment. The second middle beam 12, the third end beam 13, and the two side beams 14 define a rectangular frame, and are respectively assembled with edges of the BMS upper cover 22 and the BMS lower cover 32 to define an inner hollow BMS compartment.

Herein, the BMS lower cover 32 of the bottom plate 3 is assembled with a service cover 4. An inner side of the frame beam 1 is provided with a first connection structure 5 configured to prevent disassembly of the cover 2, a second connection structure 6 configured to prevent disassembly of the bottom plate 3, and a third connection structure 7 configured to prevent disassembly of the service cover 4. The third connection structure 7 is provided with an unlocking portion 73. In case that the unlocking portion 73 is not operated to be unlocked, the service cover 4 is locked by the third connection structure 7, the cover 2 is locked by the first connection structure 5, and the bottom plate 3 is locked by the second connection structure 6. In case that the unlocking portion 73 is operated to be unlocked, the service cover 4 is unlocked, as such, the second connection structure 6 in the inner side of the frame beam 1 is operated to unlock the bottom plate 3, and further the first connection structure 5 in the inner side of the frame beam 1 is operated to unlock the cover 2. The structures, all linked with one another, can raise the overall difficulty on disassembly of the battery pack. It is difficult for the non-professionals to disassemble the battery pack without doing in a correct disassembling order, and it is difficult for the non-professionals to find the unlocking portion 73. Thus, the battery pack cannot be disassembled without the unlocking portion 73 being operated, thereby improving the tamper-resistant performance of the battery pack.

It should be noted that the assembly between the frame beam 1 and the cover plate is fixed by a plurality of screws from outside of the cover plate and at edges of the cover plate, the assembly between the frame beam 1 and the bottom plate 3 is fixed by a plurality of screws from outside of the bottom plate 3 and at edges of the bottom plate 3, and the assembly between the service cover 4 and the BMS lower cover 32 is fixed by a plurality of screws from outside of the service cover 4 and at edges of the service cover 4.

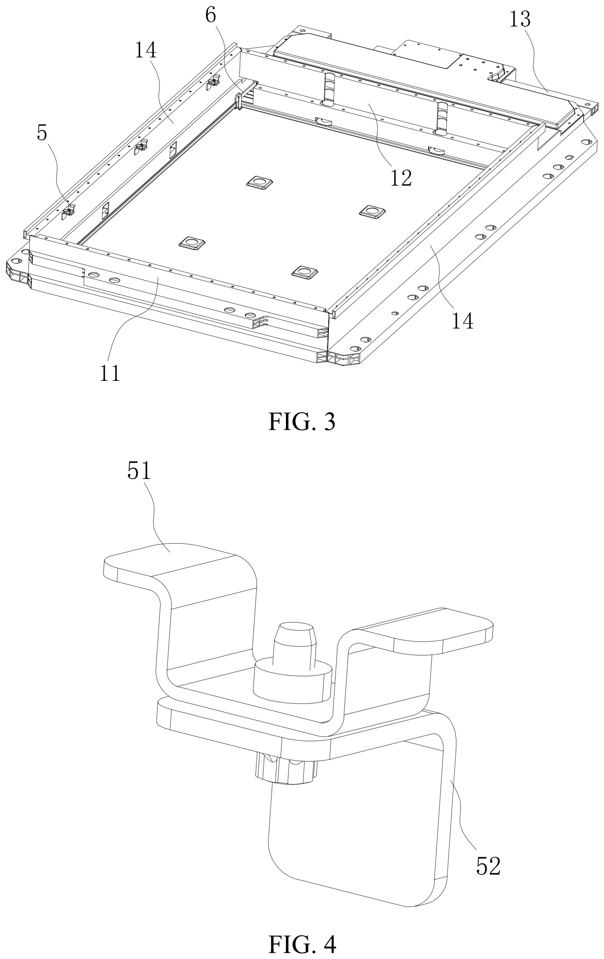

As shown in FIG. 3 to FIG. 5, a plurality of first connection structures 5 is provided, and the plurality of first connection structures 5 is uniformly distributed along two side beams 14 of the battery pack, respectively. The first connection structure 5 includes a first connecting member 51 disposed on an inner side of the BMS upper cover 22 and the battery cover 21, and a second connecting member 52. In the embodiment 1, the first connecting member 51 is fixed by welding with the BMS upper cover 22 and the battery cover 21, and in other embodiments, the fixing includes, but is not limited to, an adhesive fixing, a threaded fixing, or a snap-in fixing. The second connecting member 52 is provided on an inner side of the side beam 14. In the embodiment 1, the second connecting member 52 is fixed with the inner side of the side beam 14 by welding. In other embodiments, the fixing includes, but is not limited to, an adhesive fixing, a threaded fixing, or a snap-in fixing. Each of the first connecting members 51 corresponds to one second connecting member 52, and the first connecting member 51 and the second connecting member 52 achieve a connection and assembly effect. Certainly, if the first connecting member 51 and the second connecting member 52 are overmuch provided to stabilize the fixing of the cover 2 to the frame beam 1, the number of the first connecting member 51 and the second connecting member 52 may be inconsistent. The first connecting member 51 and the second connecting member 52 are detachably connected, and in the embodiment 1, the first connecting member 51 and the second connecting member 52 are fixed in a bolt-locking manner.

The first connecting member 51 is U-shaped, and both ends of the first connecting member 51 are provided with bending portions at connecting positions with the inner side of the cover plate, so that a contact surface between the first connecting member 51 and the cover plate is increased, and a connection stability between the first connecting member 51 and the cover plate is improved. The second connecting member 52 is L-shaped. A side of the second connecting member 52 is bolted to the first connecting member 51, and the other side of the second connecting member 52 is fixed to the inner side of the side beam 14. As such, a connection and a fixing between the cover 2 and the frame beam 1 is provided from the inside of the battery pack, to define a first tamper-resistant structure to the battery pack. When trying to disassemble the cover 2 from outside, the cover 2 is pulled by the first connecting member 51 and the second connecting member 52 inside. Thus, the cover 2 cannot be disassembled from outside.

As shown in FIG. 4 to FIG. 8, the second connection structure 6 includes a first plugging member 61, a second plugging member 62, a third locking member 63, and a fourth locking member 64. The first plugging member 61 is disposed on an inner side of the bottom guard plate 31. In the embodiment 1, the first plugging member 61 and the bottom guard plate 31 are fixed by welding. In other embodiments, the fixing includes, but is not limited to, an adhesive fixing, a threaded fixing, or a snap-in fixing. The second plugging member 62 is provided on the first end beam 11. In the embodiment 1, the first end beam 11 and the second plugging member 62 are integrally fixed, and in other embodiments, the fixing includes, but is not limited to, an adhesive fixing, a threaded fixing or a welding fixing. The third locking member 63 is provided on the inner side of the bottom guard plate 31. In the embodiment 1, the third locking member 63 and the bottom guard plate 31 are fixed by welding. In other embodiments, the fixing includes, but is not limited to, an adhesive fixing, a threaded fixing, or a snap-in fixing. The fourth locking member 64 is provided on the inner side of the side member 14. In the embodiment 1, the first end member 11 and the second plugging member 62 are fixed by bolt-locking manner. In other embodiments, the fixing includes, but is not limited to, a snap-in fixing, a threaded fixing, or a snaped fixing. The first plugging member 61 and the second plugging member 62 correspond in number, and each of the first plugging member 61 and the second plugging member 62 is provided with at least one. The third locking member 63 and the fourth locking member 64 correspond in number, and each of the third locking member 63 and the fourth locking member 64 correspond is provided with at least two. The first plugging member 61 is detachably connected to the second plugging member 62, and the third locking member 63 is detachably connected to the fourth locking member 64. In the embodiment 1, each of the first plugging member 61 and the second plugging member 62 is provided with one, and each of the third locking member 63 and the fourth locking member 64 is provided with two. The first plugging member 61 and the second plugging member 62 are fixed in a plug-in manner, and the third locking member 63 and the fourth locking member 64 are fixed in a latched manner.

Specifically, an inner side of the first end beam 11 is medially provided with a rectangular recess 111, the second plugging member 62 is positioned in the rectangular recess 111. The second plugging member 62 is strip-shaped, and the first plugging member 61 is U-shaped. Both ends of the first plugging member 61 are provided with bending portions at the connection between the first plugging member 61 and the inner side of the bottom guard plate 31, so as to increase the contact surface between the first plugging member 61 and the bottom guard plate 31, and to improve the connection stability between the first plugging member 61 and the bottom guard plate 31. The third locking member 63 is likewise U-shaped, and both ends of the third locking member 63 are provided with bending portions at the connection between the third locking member 63 and the inner side of the bottom guard plate 31, so as to increase the contact surface between the third locking member 63 and the inner side of the bottom guard plate 31, and to improve the connection stability between the third locking member 63 and the inner side of the bottom guard plate 31. The second middle beam 12 is connected at both ends to the side beam 14. The two ends of the second middle beam 12 close to the bottom guard plate 31 are provided with a through groove 121, and the fourth locking member 64 is extended through the through groove 121. The fourth locking member 64 is provided with a fixing portion 641 and a hook portion 642. The fixing portion 641 is positioned at an end of the fourth locking member 64 and is configured to connect with the side beam 14. The hook portion 642 is positioned at the other end of the fourth locking member 64 and is configured to connect with the third locking member 63. The fixing portion 641 is positioned in the BMS compartment, and the hook portion 642 is positioned in the battery compartment.

During assembly, a U-shaped notch of the first plugging member 61 of the bottom guard plate 31 is aligned with the second plugging member 62 in the rectangular recess 111 of the first end beam 11, and then the bottom guard plate 31 is pushed to insert the second plugging member 62 into the first plugging member 61, and then screws are fixed from outside to lock. The hook portion 642 of the fourth locking member 64 is extended through the through groove 121 from the BMS compartment into the battery compartment, and the hook portion 642 is hooked with the third locking member 63 and pulled back. After the third locking member 63 and the fourth locking member 64 are locked, the fixing portion 641 of the third locking member 63 is fixed to the side beam 14 in the BMS compartment, thereby defining a second tamper-resistant structure to the battery pack. When trying to disassemble from the outside of the bottom guard plate 31, the bottom guard plate 31 is subjected to the pulling action of the first plugging member 61, the second plugging member 62, the third locking member 63 and the fourth locking member 64 simultaneously. As such, the bottom guard plate 31 cannot be disassembled from the outside.

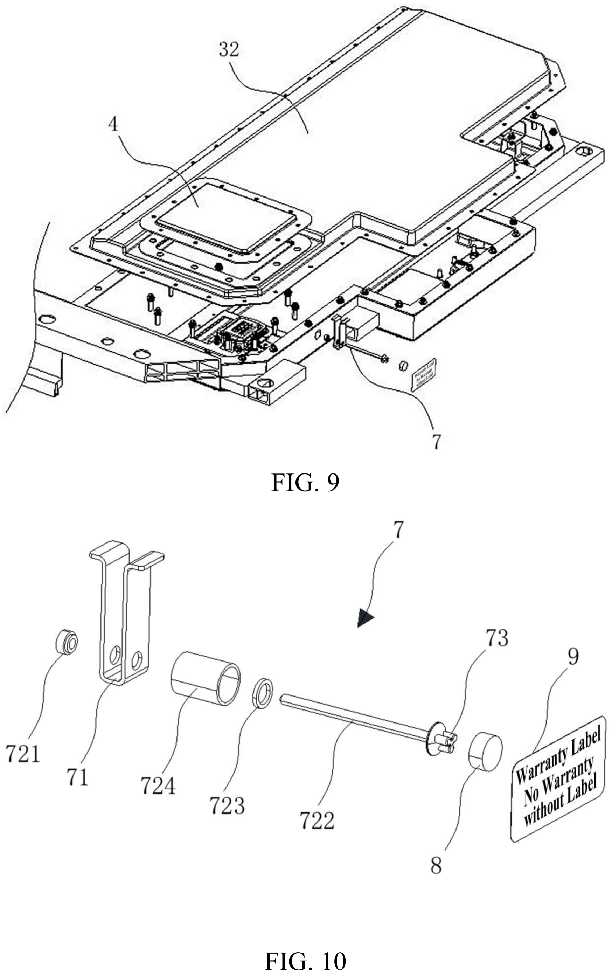

As shown in FIG. 9 to FIG. 11, the third connection structure 7 includes a first unlocking member 71 provided on an inner side of the service cover 4, and a second unlocking member 72. In the embodiment 1, the first unlocking member 71 and the service cover 4 are fixed by welding. In other embodiments, the fixing includes, but is not limited to, an adhesive fixing, a threaded fixing, or a snap-in fixing. The service cover 4 is assembled to the BMS lower cover 32 by a plurality of screw from the outside of the service cover 4 and at edges of the service cover 4. The second unlocking member 72 is extended through the third end beam 13, and an end of the second unlocking member 72 positioned the BNS compartment is detachably connected to the first unlocking member 71. In the embodiment 1, the second unlocking member 72 and the first unlocking member 71 are fixed in the bolt-locking manner. In other embodiments, the fixing includes, but is not limited to, a snap-in fixing or a rotational fixing. An unlocking portion 73 is positioned at an end of the second unlocking member 72 away from the first unlocking member 71. The unlocking portion 73 may be a part of the second unlocking member 72 and positioned at the end of the second unlocking member 72, or may be a separate member provided at the end of the second unlocking member 72.

Specifically, the first unlocking member 71 is U-shaped, and both ends of the first unlocking member 71 are provided with bending portions at the connection between the first unlocking member 71 and the inner side of the service cover 4, so as to increase the contact surface between the first unlocking member 71 and the service cover 4, and to improve the connection stability of the first unlocking member 71 and the service cover 4. The second unlocking member 72 includes a bracket nut 721, a customized bolt 722, and a sealing ring 723. The customized bolt 722 sequentially extends through the third end beam 13, centers of U-shaped plates of the first unlocking member 71, and is locked with the bracket nut 721. The bracket nut 721 can be fixed to the first unlocking member 71, so as to prevent a poor locking effect due to a slipping of the bracket nut 721 when the customized bolt 722 rotates.

The third end beam 13 is provided with a mounting barrel 724 therethrough, and the mounting barrel 724 communicates with the BMS compartment and is configured to provide a through-going space for the customized bolt 722. A sealing ring 723 is sleeved on the customized bolt 722 and is configured to seal the customized bolt 722 against an inner wall of the mounting barrel 724. The sealing ring 723 can enhance friction between the customized bolt 722 and the mounting barrel 724 to avoid the customized bolt 722 from loosening due to shaking, and thus it is not easy to lock by mistakes. The end of the second unlocking member 72 away from the first unlocking member 71 is the unlocking portion 73, and the mounting barrel 724 is provided with a first anti-fake component 8 away from the BMS compartment. The first anti-fake component 8 is configured to cover the unlocking portion 73 of the second unlocking member 72, thereby improving the secrecy of the unlocking portion 73 and reducing the possibility of being disassembled by non-professionals. In the embodiment 1, the first anti-fake component 8 is made of a cylindrical rubber stopper, and is configured to be inserted into the mounting barrel 724 to cover an operating portion (that is, the unlocking portion 73) of the customized bolt 722. The third end beam 13 is provided with a second anti-fake component 9 on a side away from the BMS compartment, and the second anti-fake component 9 is configured to cover the first anti-fake component 8. In the embodiment 1, the second anti-fake component 9 is an anti-fake component label, and is configured to serve as a reminder to inform professionals whether or not the battery pack is repaired. The second anti-fake component 9 may serve as a rule in maintenance protocol that a maintain guarantee cannot be provided once the second anti-fake component 9 being tore.

The unlocking portion 73 of the customized bolt 722 is provided with operation grooves or operation protrusions in trilobal shape, and needs to be opened by the screwdriver 10 corresponding to the pattern. In other embodiments, the pattern of the unlocking portion 73 of the customized bolt 722 may be provided in another uncommon pattern, so that the unlocking portion 73 of the customized bolt 722 cannot be easily operated by using the conventional screwdriver 10.

The third connection structure 7 enables the unlocking between the second unlocking member 72 and the first unlocking member 71 by operating the second unlocking member 72, so that the service cover 4 can be opened from the outside. When the first unlocking member 71 and the second unlocking member 72 are not unlocked, the service cover 4 cannot be opened from the outside. As such, the third tamper-resistant structure to the battery pack is realized.

For disassembling the battery pack, it is necessary to perform the disassembly and maintenance of the battery pack in the correct order by: tearing the second anti-fake component 9, that is, an anti-fake component label; and then removing the first anti-fake component 8, that is, a rubber stopper; and then rotating the unlocking portion 73 (that is, operation grooves or operation protrusions in trilobal shape) of the customized bolt 722 by using the special customized screwdriver 10; and then removing the customized bolt 722. At this time, the service cover 4 can be disassembled after removing the plurality of locking screws from the outside of the service cover 4. After the MSD plug is outage, the fixing portion 641 of the third locking member 63 can be disassembled, and then the third locking member 63 can be removed. At this time, the bottom guard plate 31 can be disassembled after removing the plurality of locking screws from the outside of the bottom guard plate 31, and finally the screws between the first connecting member 51 and the second connecting member 52 can be removed. At this time, the battery cover 21 and the BMS upper cover 22 can be disassembled after removing the plurality of locking screws from the outside of both the battery cover 21 and the BMS upper cover 22.

As above, the present application provides a tamper-resistant battery pack having the following technical effects:
1. by providing the first connection structure 5, the connection between the inside of the cover 2 and the frame beam 1 is realized, thereby effectively avoiding the disassembly of the cover 2 from the outside of the cover 2;
2. by providing the second connection structure 6, the connection between the inside of the bottom guard plate 31 and the frame beam 1 is realized, thereby effectively avoiding the disassembly of the bottom guard plate 31 from the outside of the bottom guard plate 31;
3. by providing the third connection structure 7, the connection between the inside of the service cover 4 and the frame beam 1 is realized, thereby effectively avoiding disassembly of the service cover 4 from the outside of the service cover 4;
4. by providing the unlocking portion 73, the unlocking portion 73 is operable to unlock the third connection structure 7, thereby disassembling the service cover 4, and further disassembling the bottom guard plate 31 and the cover 2 from the inside of the battery pack;
5. the first connection structure 5, the second connection structure 6, and the third connection structure 7 are all linked with one another, and have only one disassembly order, thereby effectively improving the tamper-resistance of the battery pack and reducing the possibility on non-professionals to disassemble and repair the battery pack themselves.

## Claims

1. A tamper-resistant battery pack, comprising:
a frame beam (1);
a cover (2), the cover (2) being assembled to a side of the frame beam (1); and
a bottom plate (3), the bottom plate (3) being assembled to another side of the frame beam (1); and
wherein the bottom plate (3) is assembled with a service cover (4); an inner side of the frame beam (1) is provided with a first connection structure (5) configured to prevent disassembly of the cover (2), a second connection structure (6) configured to prevent disassembly of the bottom plate (3), and a third connection structure (7) configured to prevent disassembly of the service cover (4); and the third connection structure (7) is provided with an unlocking portion (73); in case that the unlocking portion (73) is not operated to be unlocked, the service cover (4) is locked by the third connection structure (7), the cover (2) is locked by the first connection structure (5), and the bottom plate (3) is locked by the second connection structure (6).

2. The tamper-resistant battery pack according to claim 1, wherein the frame beam (1) comprises a first end beam (11), a second middle beam (12), a third end beam (13) and two side beams (14); the cover (2) comprises a battery cover (21) and a BMS upper cover (22); the bottom plate (3) comprises a bottom guard plate (31) and a BMS lower cover (32); the first end beam (11), the second middle beam (12) and the two side beams (14) connect as a rectangular frame to assemble with edges of the cover plate (21) and the bottom guard plate (31) respectively to define an inner hollow battery compartment; the second middle beam (12), the third end beam (13) and the two side beams (14) connect as a rectangular frame to assemble with edges of the BMS upper cover (22) and the BMS lower cover (32) respectively to define an inner hollow BMS compartment.

3. The tamper-resistant battery pack according to claim 2, wherein the first connection structure (5) comprises:
a first connecting member (51), the first connecting member (51) being disposed on an inner side of the cover (2); and
a second connecting member (52), the second connecting member (52) being disposed on a side beam (14) of the two side beams (14); and
wherein the first connecting member (51) is detachably connected with the second connecting member (52).

4. The tamper-resistant battery pack according to claim 2 or 3, wherein the second connection structure (6) comprises:
a first plugging member (61), the first plugging member being disposed on an inner side of the bottom guard plate (31);
a second plugging member (62), the second plugging member (62) being disposed on the first end beam (11);
a third locking member (63), the third locking member (63) being disposed on the inner side of the bottom guard plate (31); and
a fourth locking member (64), the fourth locking member (64) being disposed on a side beam (14) of the two side beams (14); and
wherein the first plugging member (61) is detachably connected with the second plugging member (62), and the third locking member (63) is detachably connected with the fourth locking member (64).

5. The tamper-resistant battery pack according to claim 4, wherein the fourth locking member (64) is provided with:
a fixing portion (641), the fixing portion (641) being positioned at an end of the fourth locking member (64) and configured to connect with the side beam (14); and
a hook portion (642), the hook portion (642) being positioned at another end of the fourth locking member (64) and configured to connect with the third locking member (63).

6. The tamper-resistant battery pack according to claim 5, wherein each end of the second middle beam (12) is provided with a through groove (121) on a side close to the bottom guard plate (31), the fourth locking member (64) extends through the through groove (121), the fixing portion (641) is positioned in the BMS compartment, and the hook portion (642) is positioned in the battery compartment and is configured to lock the second connection structure (6) from an inner side of the BMS compartment.

7. The tamper-resistant battery pack according to claim 2 or 3, wherein the third connection structure (7) comprises:
a first unlocking member (71), the first unlocking member (71) being disposed on an inner side of the service cover (4), and the service cover (4) being assembled to the BMS lower cover (32); and
a second unlocking member (72), the second unlocking member (72) extending through the third end beam (13), an end of the second unlocking member (72) positioned in the BNS compartment being detachably connected with the first unlocking member (71), and the unlocking portion (73) being positioned at an end of the second unlocking member (72) away from the first unlocking member (71).

8. The tamper-resistant battery pack according to claim 7, wherein the second unlocking member (72) comprises:
a bracket nut (721);
a customized bolt (722), the customized bolt (722) extending through the third end beam (13), the first unlocking member (71) and the bracket nut (721) sequentially; and
a sealing ring (723), the sealing ring (723) being sleeved on the customized bolt (722).

9. The tamper-resistant battery pack according to claim 8, wherein a mounting barrel (724) is provided through the third end beam (13), the mounting barrel (724) communicates with the BMS compartment and is configured to provide a through-going space for the customized bolt (722), and the sealing ring (723) is configured to seal between the customized bolt (722) and an inner wall of the mounting barrel (724).

10. The tamper-resistant battery pack according to claim 9, wherein the unlocking portion (73) is at an end of the second unlocking member (72) away from the first unlocking member (71), the mounting barrel (724) is provided with a first anti-fake component (8) away from the BMS compartment, and the first anti-fake component (8) is configured to cover the unlocking portion (73) of the second unlocking member (72).

11. The tamper-resistant battery pack according to claim 10, wherein a second anti-fake component (9) is provided on a side of the third end beam (13) away from the BMS compartment, and the second anti-fake component (9) is configured to cover the first anti-fake component (8).
